# EUROPÄISCHE PATENTSCHRIFT

(11) **EP 3 348 851 B1**
(45) Veröffentlichungstag und Bekanntmachung des Hinweises auf die Patenterteilung: **04.09.2019**
(21) Anmeldenummer: 17180282.0
(22) Anmeldetag: 07.07.2017
(51) Int. Cl.: F16C 35/02, A63H 17/26, A63H 19/22

(54) **GLEITLAGERANORDNUNG FÜR EINE ACHSE EINES KINDERSPIELZEUGES SOWIE VERWENDUNG DERSELBEN UND EIN KINDERSPIELZEUG MIT EINER GLEITLAGERANORDNUNG**
SLIDING BEARING ASSEMBLY FOR AN AXLE OF A CHILDÝS TOY AND THE USE THEREOF AND A CHILD'S TOY WITH SLIDING BEARING ASSEMBLY
SYSTÈME DE PALIER LISSE POUR UN AXE D'UN JOUET ET SON UTILISATION ET JOUET COMPRENANT UN SYSTÈME DE PALIER LISSE

(30) Priorität: 13.01.2017 DE 202017100168 U
(43) Veröffentlichungstag der Anmeldung: 18.07.2018
(73) Patentinhaber: Habermaass GmbH, 96476 Bad Rodach (DE)
(72) Erfinder: HEISIG, Thomas, 96242 Sonnefeld (DE)
(74) Vertreter: Grünecker Patent- und Rechtsanwälte PartG mbB

(56) Entgegenhaltungen:
- EP-A2- 0 128 449
- DE-A1- 2 152 212
- DE-A1-102012 020 208
- DE-A1-102015 204 068

## Beschreibung

Die vorliegende Erfindung betrifft eine Gleitlageranordnung für eine Achse eines Kinderspielzeuges mit den Merkmalen des Oberbegriffes des Anspruchs 1, sowie die Verwendung einer Gleitlageranordnung mit Merkmalen des Anspruchs 14 und ein Kinderspielzeug mit den Merkmalen des Anspruchs 15.

DE 10 2012 020208 A1 offenbart eine gleitgelagerte Radbefestigungsvorrichtung für Spielfahrzeuge. Ein Rad kann auf einer Achse oder Welle montiert werden und weist sowohl eine erste Aufnahme für eine Pressmutter als auch eine zweite Aufnahme für eine Nut auf.

Es sind zahlreiche Spielzeuge für Kinder mit drehbaren Teilen bekannt, welche insbesondere an Achsen drehbar gelagert sind. Dies betrifft zum Beispiel Spielzeugautos oder-eisenbahnen sowie Puppenwagen, in denen an einer Achse geführte Räder drehbar an einem Korpus oder Gehäuse gelagert sind.

Ein weiteres Beispiel sind Lauflernwagen, an denen sich Kleinkinder beim Laufenlernen hochziehen können und vom Lauflernwagen unterstützt erste Schritte gehen können. Diese Lauflernwagen unterliegen vergleichsweise hohen Anforderungen an die Stabilität, da sie sowohl kipp- als auch bruchsicher sein müssen, um im bestimmungsgemäßen Gebrauch annähernd das vollständige Gewicht des Kleinkindes zu stützen.

Um für ausreichende Stabilität beim Hochziehen und Stützen zu sorgen und zu verhindern, dass der Lauflernwagen dabei unkontrolliert rollt, verfügen Lauflernwagen typischerweise über Bremsen, welche den Rollwiderstand der Räder erhöhen. Derartige Bremsen können realisiert werden, indem eine Kraft parallel zur Achse einseitig auf das Rad wirkt, beispielsweise an einer Seitenfläche eines massiv ausgeführten Rades oder an eine Seitenfläche einer Felge. Die aus der Kraft resultierende Reibungswirkung bremst das Rad.

Diese exzentrisch wirkende einseitige Axialkraft wird über das Rad in ein auf die Achse wirkendes Biegemoment übertragen und führt zu einer erhöhten Belastung der Achslager mit daraus resultierender geringerer Lebensdauer.

Aus dem Stand der Technik bekannte Gleitlageranordnungen für Achsen von Kinderspielzeugen umfassen einfache Durchführungen der Achse durch Bohrungen oder kreisrunde Aufnahmen in den rotierenden Teilen sowie Axialsicherungen mittels Splinten oder Muttern. Um den Reibungswiderstand zwischen Achse und Rad zu verringern, ist es möglich Gleitlagerbuchsen in tragende Bohrungen einzubringen, in denen die Achse geführt ist.

Der vorliegenden Erfindung liegt die Aufgabe zugrunde, eine gattungsgemäße Gleitlageranordnung sowie die Verwendung einer entsprechenden Gleitlageranordnung und ein entsprechendes Kinderspielzeug vorzuschlagen, welches eine zuverlässige, stabile und langlebige Gleitlagerung gewährleistet und möglichst einfach zu montieren ist.

Diese Aufgabe wird erfindungsgemäß gelöst mit einer Gleitlageranordnung mit den Merkmalen des Anspruchs 1.

Die Haltebuchse erlaubt eine günstige Fixierung der Gleitbuchse in einer Achsbohrung. Die Rastverbindung ist einfach zu montieren und sorgt für eine zuverlässige Verbindung zwischen Gleitbuchse und Haltebuchse. Dadurch kann die Aufnahme zur gleitenden Lagerung der Achse sicher in ihrer Position gehalten werden. Ferner ist die Gleitlageranordnung in der Lage, die Lasten, welche im Gebrauch in einem Kinderspielzeug zu erwarten sind, zuverlässig aufzunehmen und gleichzeitig ein reibungsarmes Gleiten der Achse in der Gleitlageranordnung zu erlauben.

In einer Ausführungsform kann ein Haltebereich in der Umgebung der Achsbohrung wenigstens teilweise zwischen der Gleitbuchse und der Haltebuchse gehalten sein. Dies ermöglicht eine sichere Positionierbarkeit der Gleitbuchse und der Haltebuchse relativ zur Achsbohrung und zueinander.

Gemäß einer weiteren Ausführung kann der Haltebereich wenigstens teilweise zwischen einer Flanschfläche der Gleitbuchse und einer Flanschfläche der Haltebuchse geklemmt gehalten sein. Die Ausbildung der Flanschflächen zur Herstellung der Klemmung erlaubt es, den Haltebereich sicher relativ zur Gleitbuchse und Haltebuchse zu halten.

Günstigerweise kann die Rastverbindung der Gleitbuchse mit der Haltebuchse innerhalb des Bereiches der Achsbohrung ausgeführt sein. Dadurch kann eine platzsparende Ausführung gewährleistet werden und die Rastverbindung vor äußeren Einflüssen besser abgeschirmt sein.

In einer Variante kann die Haltebuchse wenigstens einen Steg aufweisen, welcher sich in Richtung der Gleitbuchse erstreckt und an einer Stegführung der Gleitbuchse geführt sein kann. Dadurch lässt sich die Positionierung der Haltebuchse relativ zur Gleitbuchse, insbesondere bei der Montage und auch im zusammengebauten Zustand erleichtern.

In einer möglichen Gestaltungsform kann die Rastverbindung zwischen dem Steg und der Stegführung ausgebildet sein. Damit kann eine günstige Führung während des Herstellens der Rastverbindung gewährleistet werden um die Montage zu vereinfachen.

Gemäß einer Möglichkeit zur Ausführung der Erfindung kann der Steg wenigstens einseitig als Harpunensteg ausgeführt sein, und insbesondere mit einer Harpunenstegführung an der Gleitbuchse in rastendem Eingriff sein. Die Ausführung als Harpunensteg mit entsprechend ausgeformter Harpunenstegführung erlaubt eine Rastverbindung in verschiedenen Position der Gleitbuchse und Haltebuchse relativ zueinander und erhöht die Zuverlässigkeit der Verbindung, da mehrere hintereinander ausgeführte Rasthaken in rastendem Eingriff sind.

In einer günstigen Ausgestaltung können die Gleitbuchse und die Haltebuchse in verschiedenen Positionen zueinander verbindbar sein, wobei insbesondere die Flanschflächen der Gleitbuchse und der Haltebuchse aufeinander zu verschiebbar sein können. Dadurch kann die Gleitlageranordnung an unterschiedliche Maße von Achsen und/oder Achsbohrungen anpassbar sein, beispielsweise um sie für unterschiedlich bemaßte Anordnungen zu verwenden oder Toleranzen auszugleichen. Insbesondere, wenn die Flanschflächen aufeinander zu schiebbar sind, kann eine Gleitlageranordnung an verschieden Tiefen des Achsbohrung oder dicken des Haltebereiches angepasst sein und zuverlässig die Achse lagern.

Denkbar kann der Steg mit der Gleitbuchse in Umfangsrichtung eine etwa bündige Oberfläche ausbilden, welche insbesondere eine im Wesentlichen zylindrische Form hat. Dadurch kann ein sicherer Sitz der Gleitlageranordnung innerhalb der Achsbohrung erreicht werden. Insbesondere bei Achsbohrungen mit einem zylindrischen Querschnitt bietet sich eine äußere zylindrische Form der Oberfläche an, um sie sicher in der Bohrung anzuordnen.

In einer Ausgestaltung kann die Aufnahme zur Lagerung der Achse zwischen einem oder mehreren Stegen und/oder einer oder mehreren Stegführungen aufgenommen sein und insbesondere von den Stegen und/oder Stegführungen gestützt werden. Dies erlaubt eine kompakte Ausführung der Gleitlageranordnung. Durch die zusätzliche Stützung der Aufnahme kann die Konstruktion zusätzlich stabilisiert werden.

Gemäß einer Variante können die Gleitbuchse und/oder die Haltebuchse in radialer Richtung unbeweglich an der Achsbohrung gehalten sein, wobei insbesondere äußere Oberflächen des Steges und/oder der Stegführung mit der Achsbohrung in Kontakt sind. Dies erlaubt eine sichere Positionierung, zum Beispiel Zentrierung oder exzentrische Ausrichtung, der Gleitbuchse in der Achsbohrung. Der oberflächige Kontakt unterstützt diese Positionierung.

Möglicherweise kann die Gleitbuchse im zusammengesetzten Zustand unlösbar mit der Haltebuchse verbunden sein. Dies erhöht die Sicherheit der Verbindung und kann beispielsweise eine unsachgemäße Montage erschweren.

In einer Gestaltungsvariante kann die Flanschfläche der Gleitbuchse und/oder die Flanschfläche der Haltebuchse in Umfangsrichtung unbeweglich an dem Haltebereich gehalten sein, insbesondere mittels kraftschlüssigem und/oder formschlüssigem Kontakt zwischen dem Haltebereich und wenigstens einer der Flanschflächen. Diese ermöglicht eine sichere Positionierung der Gleitbuchse und/oder der Haltebuchse relativ zur Achsbohrung. Durch einen formschlüssigen Kontakt kann die relative Position genau und sehr zuverlässig eingestellt werden. Durch kraftschlüssigen Kontakt kann die Positionierung mit geringen Anforderungen an die Ausgestaltung der Halte-/Gleitbuchse und der Haltefläche erreicht werden.

Gemäß einer günstigen Ausführungsform kann wenigstens ein, an einer der Flanschflächen ausgeführtes, Ausgleichsprofil derart ausgebildet sein, dass es an einem Haltebereich anpassend zur Anlage gelangen kann. Dadurch kann ein besserer Halteeffekt zwischen der Flanschfläche und dem Haltebereich erzielt werden. Beispielsweise können Unebenheiten des Haltebereiches, etwa durch Fertigungstoleranzen oder Verformungen, durch das Ausgleichsprofil ausgeglichen werden. Das Ausgleichsprofil könnte ebenfalls in eine entsprechend ausgeformte Ausnehmung in dem Haltebereich eingreifen, oder den Haltebereich leicht verformen, und/oder selbst leicht verformbar sein.

In einer Gestaltungsvariante kann ein an der Haltebuchse oder der Gleitbuchse ausgebildeter Haltevorsprung mit dem Haltebereich in formschlüssigen Eingriff sein. Dadurch kann die Verdrehsicherheit der Gleit- und Haltebuchse in der Achsbildung verbessert werden.

Günstigerweise kann die Haltebuchse und/oder die Gleitbuchse und/oder ein Achsenende durch eine Kappe bedeckt sein. Durch die Kappe kann das äußere Erscheinungsbild der Gleitlageranordnung verbessert werden. Außerdem können Gleitbuchse, Haltebuchse und/oder Wellenende vor äußerem Zugriff geschützt werden.

Gemäß einer weiteren Variante kann die Achse in einer Umfangsrichtung von der Gleitbuchse wenigstens annähernd vollständig umschlossen sein. Dies unterstützt die Lagerung der Achse in der Gleitbuchse, und beschränkt die Bewegungsfreiheit in den radialen Richtungen wirkungsvoll.

In einer Ausgestaltungsform kann die Gleitbuchse und/oder die Haltebuchse in axialer Richtung an der Achse gehalten sein. Dadurch kann die Achse in einer gewünschten axialen Position, beispielsweise in Relation zur Achsbohrung oder zum Haltebereich, gehalten werden.

In einer weiteren Fortbildung der Erfindung kann eine Axialsicherung in einem Schlitz in der Gleitbuchse und/oder der Haltebuchse aufgenommen sein, wobei sich der Schlitz insbesondere in einer Umfangsrichtung erstreckt. Dies erlaubt eine zuverlässige axiale Positionierung der Welle relativ zur Gleitbuchse oder Haltebuchse, wobei die Axialsicherung durch Anordnung in einem Schlitz vor äußeren Zugriffen geschützt sein kann.

Möglicherweise kann sich die Achse in oder durch eine Haltebohrung erstrecken, und darin durch eine Lagerbuchse geführt werden, wobei ein Flansch der Lagerbuchse flächig an einer etwa radial ausgerichteten Oberfläche der Haltebuchse oder der Gleitbuchse anliegt und insbesondere in einer Ausnehmung in der Haltebuchse oder der Gleitbuchse aufgenommen sein kann. Durch das Anliegen der Lagerbuchse an der Haltebuchse oder Gleitbuchse kann gewährleistet werden, dass die auf der Achse geführten Teile mit möglichst geringem Widerstand durch Reibung relativ zueinander verdreh- oder verschwenkbar sind. Die Lagerbuchse kann bei entsprechender Rotation verschleißarm über die Gleit- oder Haltebuchse gleiten und einen Abstand zwischen den rotierenden Teilen aufrechterhalten. Durch die Aufnahme des Flansches der Lagerbuchse in einer Ausnehmung kann Bauraum eingespart werden.

In einer günstigen Variante kann sich die Achse in oder durch eine Sicherungsbuchse erstrecken und an dieser in axialer Richtung gehalten sein, wobei die Achse mittels der Sicherungsbuchse insbesondere in einer Haltebohrung gehalten werden kann. Dadurch wird die axiale Positionierbarkeit der Achse, insbesondere relativ zur Haltebohrung, verbessert.

Gemäß einer weiteren Ausgestaltung der Erfindung kann die Axialsicherung in einem Schlitz in der Sicherungsbuchse aufgenommen sein, wobei sich der Schlitz insbesondere in einer Umfangsrichtung erstrecken kann. Dadurch kann die axiale Fixierung der Sicherungsbuchse auf der Achse sicher erreicht werden. Insbesondere die Anordnung der Axialsicherung innerhalb des Schlitzes erhöht ihre Zuverlässigkeit und schützt sie vor externem Zugriff.

Eine Nabe mit einigen oder allen der im Folgenden beschriebenen Merkmalen kann in Kombination mit einer der zuvor beschriebenen Gleitlageranordnungen ausgebildet werden (wobei die Nabe nicht alleine beansprucht wird).

Gemäß einem weiteren Aspekt kann die Gleitlagerung mit der Gleitbuchse oder Sicherungsbuchse gemäß der Erfindung eingerichtet sein, um auf einer Achse oder Welle angebracht zu werden, mit einer ersten Aufnahme für ein Axialsicherungsmittel zum Festlegen der Position der Gleitbuchse oder Sicherungsbuchse auf der Achse oder Welle in deren axialer Richtung, und einer zweiten Aufnahme für ein Verdrehsicherungsmittel zum Festlegen der Position der Gleitbuchse oder Sicherungsbuchseauf der Achse oder Welle in deren Umfangsrichtung. Dadurch wird die Möglichkeit, die Gleitlagerung in unterschiedlichen Anwendungsfällen einzusetzen, verbessert.

Je nach Anwendungsfall kann die Nabe günstig in Umfangsrichtung an der Welle oder Achse festgelegt werden, sodass sie zusammen mit der Achse oder Welle rotiert. Das Verdrehsicherungsmittel kann je nach Aufgabenstellung eine axiale Verschiebung der Nabe erlauben oder gleichzeig als axiales Sicherungsmittel wirken. Andererseits kann eine gleich ausgebildete Nabe mittels des Axialsicherungsmittel in axialer Richtung auf der Achse oder Welle fixiert werden. In Analogie zum Verdrehsicherungsmittel kann das Axialsicherungsmittel eine Rotation der Nabe relativ zur Achse oder Welle erlauben oder die Nabe auch gegen Verdrehen sichern. Die Welle oder Achse kann eingerichtet sein, durch Torsion oder Biegung beansprucht zu werden oder durch eine Kombination beider Belastungsarten.

Gemäß einer Fortbildung können die erste Aufnahme und die zweite Aufnahme wenigstens teilweise in einem gemeinsamen Aufnahmeraum in der Nabe ausgebildet sein. Dadurch kann das Volumen der Nabe günstig ausgenutzt werden und Bauraum eingespart werden.

Günstigerweise können die erste Aufnahme und die zweite Aufnahme eine gemeinsame Öffnung nach außen aufweisen. Dadurch kann die Fertigung erleichtert werden und eine größere Stabilität der Nabe erreicht werden. Die Sicherungsmittel können günstig durch die gemeinsame Öffnung eingeführt werden.

Möglicherweise kann die erste Aufnahme ausgebildet sein, einen Sicherungsring aufzunehmen und/oder dass die zweite Aufnahme ausgebildet ist, einen Sicherungsstift aufzunehmen. Ein Sicherungsring bietet eine günstige Möglichkeit zur axialen Sicherung der Nabe, während ein Sicherungsstift eine günstige Sicherung in Umfangsrichtung erlaubt.

In einer weiteren Ausgestaltung der Erfindung kann die zweite Aufnahme eine, insbesondere wenigstens teilweise zylindrisch geformte, Anlageoberfläche zur wenigstens teilweise formschlüssigen Anlage des Verdrehsicherungsmittels aufweisen. Dadurch kann das Verdrehsicherungsmittel gut in seiner Position relativ zur Nabe gehalten werden. Insbesondere zur Verwendung eines zylindrischen, etwa stift- oder bolzenförmigen, Verdrehsicherungsmittel bietet sich eine zylindrische Anlageoberfläche an.

Denkbar kann jeweils nur eines der Sicherungsmittel durch die Nabe aufnehmbar sein. Insbesondere bei einer Überschneidung der Aufnahmen kann die Verwendung eines Sicherungsmittels die gleichzeitige Verwendung eines weiteren Sicherungsmittels behindern. Durch die Verwendung jeweils nur eines Sicherungsmittels kann die Montage und Verwendung der Nabe vereinfacht werden.

Gemäß einer Variante kann die erste Aufnahme eingerichtet sein, die Beweglichkeit des Axialsicherungsmittel in axialer und/oder radialer Richtung der Achse oder Welle zu beschränken. Dadurch kann das Axialsicherungsmittels in einer gewünschten Position relativ zur Nabe gehalten werden um wirkungsvoll die Aufgabe der axialen Sicherung zu erfüllen.

In einer Gestaltungsform kann die zweite Aufnahme eingerichtet sein, die Beweglichkeit des Verdrehsicherungsmittels in Umfangs- und/oder axialer Richtung der Achse oder Welle zu beschränken. Dadurch kann die Position des Verdrehsicherungsmittels relativ zur Nabe sicher festgelegt werden um für eine gute Sicherung der Nabe gegen Verdrehen zu sorgen.

In einer günstigen Ausführung können die erste Aufnahme und/oder die zweite Aufnahme in wenigstens einer radialen Richtung nach außen hin abgeschlossen sein. Dadurch lassen sich die Sicherungsmittel gut in der jeweiligen Aufnahme positionieren und halten.

Gemäß einer möglichen Umsetzung können eine Öffnung der ersten und/oder eine Öffnung der zweiten Aufnahme nach außen hin verschließbar sein, insbesondere mittels einer Kappe. Damit kann das Sicherungsmittel gegen äußeren Zugriff gesichert werden und es sicher in der Aufnahme gehalten werden. Je nach Ausführung könnte außerdem der ästhetische Eindruck der Nabe verbessert werden.

Im Folgenden wird die Erfindung anhand von Ausführungsbeispielen mit zugehörigen Figuren erläutert. Es zeigen:
- Figur 1: einen Kinderspielzeugwagen in isometrischer Ansicht,
- Figur 2: eine in dem Kinderspielzeugwagen in Figur 1 genutzte, erfindungsgemäße Gleitbuchse,
- Figur 3: eine in dem Kinderspielzeugwagen in Figur 1 genutzte, erfindungsgemäß Haltebuchse,
- Figur 4: die Gleitbuchse aus Figur 2 und Haltebuchse aus Figur 3 in montiertem Zustand,
- Figur 5: einen Querschnitt durch die Vorderachse des in Figur 1 gezeigten Kinderspielzeugwagens,
- Figur 6: einen Kinderspielzeugwagen in isometrischer Ansicht, gemäß einer weiteren Ausführungsform,
- Figur 7: einen Querschnitt durch ein gebremstes Rad auf einer kurzen Achse des der in Fig. 6 gezeigten Kinderspielzeugwagens,
- Figur 8: eine Draufsicht auf eine zweite, erfindungsgemäße Ausführungsform einer Gleitbuchse,
- Figur 9: eine Draufsicht auf eine zweite Ausführungsform einer Sicherungsbuchse, und
- Figur 10: eine Draufsicht auf die in Figur 9 gezeigte Sicherungsbuchse im Einbauzustand.

Gleiche oder sich entsprechende Merkmale werden in verschiedenen Figuren durch identische Referenzzeichen markiert. Auf eine erneute Beschreibung wiederkehrender Merkmale in verschiedenen Figuren wird verzichtet, wenn diese bereits im Bezug auf eine vorherige Figur erläutert wurden.

Die im Folgenden beschriebenen Achsen können in alternativen Ausführungsformen auch als Wellen ausgeführt sein, also ein Drehmoment übertragen um beispielsweise mittels eines Antriebes Räder oder dergleichen anzutreiben. Die Verwendung der Gleitlageranordnung ist nicht auf Räder beschränkt, sondern kann für alle Arten drehbarer Teile, vor allem in Kinderspielzeugen verwendet werden. Möglich sind zum Bespiel Karussells, Krane und so weiter.

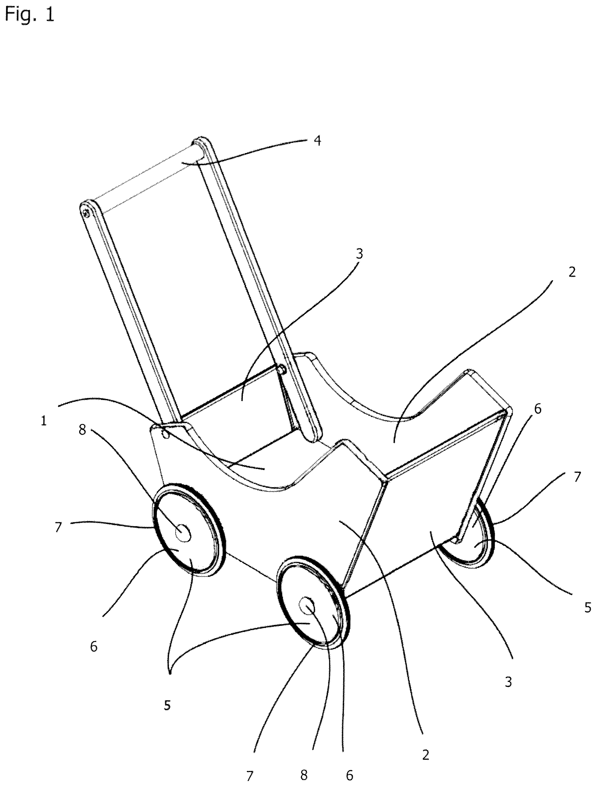

Figur 1 zeigt einen Puppenwagen, mit einem Rahmengestell, welches aus einer Bodenplatte 1, einem Paar gegenüberliegenden Seitenplatten 2 sowie gegenüberliegenden Vorder- bzw. Hinterplatten 3 gebildet wird und somit einen Korb beziehungsweise Kasten bildet. An der Hinterseite des Wagens ist ein Griff 4 ausgebildet, auf eine Höhe über dem Boden, sodass er von einem Kleinkind bequem, etwa auf Bauch- oder Brusthöhe gegriffen werden kann. Die Seiten-, Vorder- und Rückwände sowie die Bodenplatte sind aus Holz gefertigt und miteinander verleimt. Es sind alternative Ausführungsformen mit anderen Materialien und Verbindungsarten möglich. Denkbar sind Kunstoffe oder Metalle, sowie beispielsweise Schraub- oder Rastverbindungen. Der Kinderspielwagen kann aus einem Rahmen mit an diesem Rahmen angebrachten Wandungen aufgebaut sein.

Der Kinderspielwagen weist vier Räder 5 auf, wobei zwei Vorderräder auf einer gemeinsamen durchgehenden Vorderachse geführt sind und ebenso zwei Hinterräder auf einer gemeinsamen durchgehenden Hinterachse geführt sind. Die Vorder- und Hinterachse sind durch jeweils eine Haltebohrung in jeder der beiden Seitenplatten 2 geführt.

Jedes der Räder 5 besitzt einen aus massivem Holz gefertigten Rollkörper 6, an dessen Umfangsfläche ein Reifen 7 aus Gummi aufgebracht ist. In alternativen Ausführungsformen können auch andere Bauformen und Materialien für die Räder Verwendung finden, beispielsweise sind vollständig aus Kunststoff gefertigte Räder oder Speichenräder denkbar. Anstelle von Reifen aus massivem Gummi können auch mit Luft gefüllte Reifen Verwendung finden oder auf eine Bereifung vollständig verzichtet werden.

Die Lagerung der Räder auf den Achsen ist in der gewählten Darstellungsform nicht sichtbar, da die Gleitlageranordnung durch eine Schutzkappe 8 verdeckt ist.

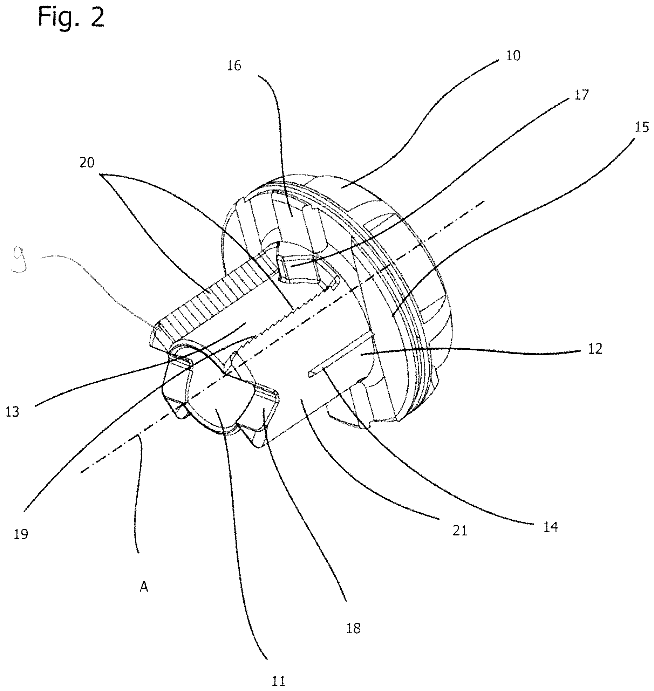

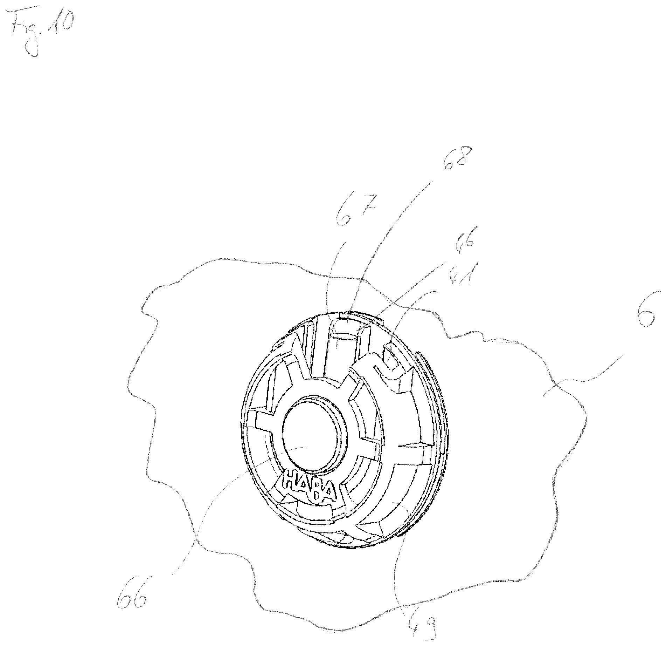

Figur 2 zeigt eine Gleitbuchse, wie sie zur Lagerung der Räder auf den Achsen in dem Kinderspielwagen von Figur 1 verwendet wird. Die geometrische Rotationsachse A, um die die Achse rotierbar ist, ist als Strichpunktlinie gekennzeichnet
Die Gleitbuchse besteht im Wesentlichen aus einem Zylinderabschnitt 9, welcher sich in eine Achsbohrung im Rollkörper 6 konzentrisch zur Rotationsachse A erstreckt und einem an den Zylinderabschnitt 9 angeschlossenen Flansch 10, welcher im Einbauzustand außerhalb der Achsbohrung an einen Haltebereich des Rollkörpers 6 anliegt. Der Zylinderabschnitt 9 weist eine zylindrische Aufnahme 11 zur gleitenden Lagerung einer Achse auf. Die zylindrische Aufnahme 11 ist als geschlossener Zylinder ausgeführt und besitzt einen Innendurchmesser, der geringfügig größer als der Außendurchmesser der Achse ist, sodass die Achse innerhalb der zylindrischen Aufnahme 11 mit geringer Reibung verdrehbar ist. In alternativen Ausführungsformen, etwa wie in Figur 10 gezeigt, kann eine solche Verdrehbarkeit mittels Verdrehsicherungsmitteln beschränkt werden.

Sich gegenüberliegend sind zwei identisch ausgeführte verstärkte Bereiche 12 an der Außenseite der zylindrischen Aufnahme 11 ausgebildet. Der Außendurchmesser der verstärkten Bereiche 12 entspricht dem Innendurchmesser der Achsbohrung im Rollkörper 6, in welche sich der Zylinderabschnitt 9 erstreckt. Zwischen den verstärkten Bereichen am äußeren Umfang der zylindrischen Aufnahme 11 sind sich gegenüberliegend zwei Stegführungen 13 ausgebildet, wobei die jeweils der Stegführung zugewandten Seitenflächen der verstärkten Bereiche 12 als Harpunensteg 20 ausgeführt sind und somit als Harpunenstegführung für die nachfolgend erläuterte Haltebuchse wirken können.

Diese Harpunenstege 20 zeichnen sich durch eine Anzahl von hintereinander in Reihe ausgeführten Widerhaken 19 aus.

An den verstärkten Bereichen 12 ist jeweils ein herausstehender Vorsprung 14 ausgebildet, der aus der etwa zylindrisch geformten äußeren Oberfläche 21 hervorsteht. Dieser ist geeignet, Fertigungstoleranzen und daraus resultierendes Spiel zwischen der äußere Oberfläche 21 der verstärkten Bereiche 12 und der Innenoberfläche der Achsbohrung auszugleichen, indem er einen geringen Luftspalt zwischen den Oberflächen ausfüllen kann oder beispielsweise geringfügig in ein verformbares Material des Rades eindringen kann. Dadurch kann die Gleitbuchse in Umfangsrichtung besser unbeweglich in der Achsbohrung gehalten werden.

Der Flansch 10 weist eine in Richtung des Zylinderabschnittes 9 ausgerichtete Flanschfläche 15 auf, welche sich senkrecht zur Rotationsachse A erstreckt. Die Flanschfläche 15 besitzt zwei gegenüberliegende Ausgleichsprofile 16, die jeweils einen Vorsprung aufweisen, welcher aus einem etwas zurückgenommenen Abschnitt der Flanschfläche 15 herausstehen. Im Einbauzustand liegen die Flanschfläche 15 und günstigerweise auch das Ausgleichsprofil 16 im Haltebereich des Rades an. Abhängig von der Qualität des Holzes können dessen Faserausrichtung und variierende Feuchtegehalte zur Ausbildung unebener Oberflächen führen. Durch die Ausgleichsprofile 16 kann auch bei unebenen oder ungleichmäßigen Haltebereichen eine relativ große Kontaktfläche hergestellt werden. Wenn der Haltebereich aus einem weichen, verformbaren Material besteht, kann das Ausgleichsprofil 16 in den Haltebereich eindringen und diesen elastisch oder plastisch verformen. Denkbar ist auch, dass das Ausgleichsprofil oder die Flanschflächen leicht verformbar sind, um Toleranzen auszugleichen. An der dem Flansch 10 zugewandten Seite des Zylinderabschnittes 9 ist ein in seiner Grundform etwa dreieckiger Dorn 17 ausgeführt, welcher im Einbauzustand in einer entsprechend geformten Aussparung an der Haltebuchse aufgenommen werden kann, um die Verdrehsicherheit zwischen Haltebuchse und Gleitbuchse zu erhöhen. Eine derartige Aussparung 18 ist am dem Flansch 10 abgewandten Ende der zylindrischen Aufnahme 11 ausgebildet. Diese Aussparung 18 kann im zusammengebauten Zustand mit einem Dorn der Haltebuchse in Eingriff kommen um in gleicher Weise wie der Dorn 17 die Verdrehsicherheit zwischen Haltebuchse und Gleitbuchse zu erhöhen.

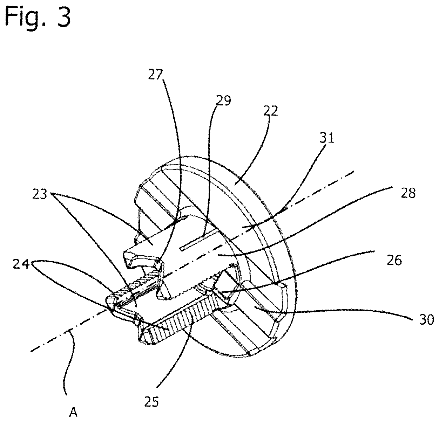

Figur 3 zeigt eine Haltebuchse, welche ebenso wie die Gleitbuchse einen Flansch 22 aufweist. An dem Flansch 22 sind zwei gegenüberliegende identische Stege 23 ausgeführt, welche von dem Flansch 22 ausgehend in die Achsbohrung des Rades 5 hineinragen. Beide Seiten der Stege 23 sind jeweils als Harpunensteg 24 ausgeführt und weisen ebenso wie die Harpunenstege 20 an der Gleitbuchse in Reihen angeordnete Widerhaken 25 auf.

Die Stege 23 sind so bemaßt, dass sie in die entsprechend ausgeformte Stegführungen 13 der Gleitbuchse passen, wobei die Widerhaken 25 an dem Steg mit den Widerhaken 19 an der Stegführung 13 der Gleitbuchse in Eingriff sind und die Haltebuchse mit der Gleitbuchse zusammen halten.

In übereinstimmender Geometrie mit der Gleitbuchse weist auch die Haltebuchse einen Dorn 26 auf, welcher zwischen den Stegen 23 aus dem Flansch hervorragt sowie einer Aussparung 27 am gegenüberliegenden Ende der Stege 23 auf. Der Dorn 26 der Haltebuchse kann im zusammengebauten Zustand mit der Aussparung 18 der Gleitbuchse in Eingriff kommen. In gleicher Weise kann die Aussparung 27 der Haltebuchse den Dorn 17 der Gleitbuchse aufnehmen.

In Analogie zu den verstärkten Bereichen 12 an der Gleitbuchse weisen auch die Stege der Haltebuchse äußere Oberflächen 28 auf, deren Form und Abstand zueinander so gewählt ist, dass sie im zusammengebauten Zustand mit der Innenfläche der Achsbohrung im Rollkörper 6 in Kontakt sind. Ebenso wie die Außenflächen 21 an der Gleitbuchse weisen auch die äußeren Oberflächen 28 der Stege 23 der Haltebuchse nach außen herausragende Vorsprünge 29 auf, die die gleiche Funktion erfüllen wie die Vorsprünge 14 an der Gleitbuchse.

In Analogie zum Haltevorsprung 16 der Gleitbuchse, weist auch die Haltebuchse zwei Ausgleichsprofile 30 auf, welche mit einer Flanschfläche 31 etwa in einer Eben liegen. In anderen Ausführungsformen können die Haltevorsprünge 16 aus der Flanschfläche 31 hervorragen. Die Flanschfläche 31 ist senkrecht zur Rotationsachse A ausgebildet. Im zusammengebauten Zustand liegt die Flanschfläche 31 an einem Haltebereich des Rades an und kann insbesondere einen kraftschlüssigen Kontakt mit dem Haltebereich ausbilden, sodass durch die resultierende Reibung die Haltebuchse verdrehsicher am Haltebereich gehalten wird. Die Ausgestaltung und Funktionsweise der Ausgleichsprofile 30 der Haltebuchse ist identisch zu den Ausgleichsprofilen der Gleitbuchse.

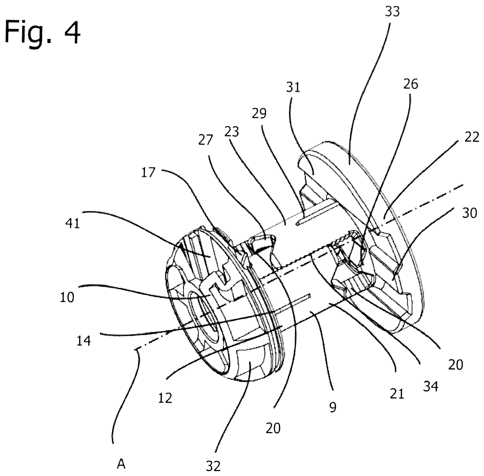

Figur 4 zeigt die in Figur 2 dargestellte Gleitbuchse mit der in Figur 3 dargestellten Haltebuchse in einer zusammengebauten Position, wie sie zur Lagerung der Räder, wie in Figur 1 dargestellt, verwendet wird.

Dabei ist gut zu erkennen dass sich die Flanschflächen 15, 31 sowie Flansche 10, 22 von Gleitbuchse 32 und Haltebuchse 33 parallel gegenüberstehen. Zwischen den parallelen Flanschflächen 15, 31 ist der Haltebereich des hier nicht mit dargestellten Rades geklemmt gehalten, wobei die Flanschflächen 15, 31 ein paar entgegengesetzte Druckkräfte auf den Haltebereich aus üben, sodass Haltebuchse 33 und Gleitbuchse 32 verdrehfest am Rad gehalten sind.

Durch die Ausführung der Harpunenstege 20, 24 mit den Widerhaken 19, 25 wird zwischen der Gleitbuchse 32 und der Haltebuchse 33 eine Rastverbindung 34 hergestellt. Aufgrund der Vielzahl zueinander passender Widerhaken an beiden Buchsen kann die Rastverbindung in verschiedenen Abständen der Flansche 22, 10 zueinander hergestellt werden um eine Gleitlageranordnung an verschiedene Dicken von Rädern bzw. Haltebereich von Rädern anpassbar zu machen. Dazu sind die Gleitbuchse 32 und die Haltebuchse 33 in Richtung der Rotationsachse A relativ zueinander verschiebbar. Ein minimaler Abstand zwischen den Flanschen 10, 22 ist gekennzeichnet durch ein vollständiges Ineinandergreifen der Dorne 26, 17 mit den entsprechenden Aussparungen 18, 27.

Je nach Form der Widerhaken kann die Rastverbindung so ausgeführt sein, dass sie mit ausreichender Kraft wieder auseinander gezogen werden kann, ohne die Buchsen zu beschädigen. Anstelle einer solchen lösbaren Verbindung ist auch eine unlösbare Verbindung möglich. Dabei greifen die Widerhaken so ineinander, dass sie nichtmehr beschädigungsfrei gelöst werden können.

Die äußeren Oberflächen 21 der verstärkten Bereiche 12 an der Gleitbuchse 32 sind jeweils bündig mit den äußeren Oberflächen 28 der Stege 23. Zusammen bilden die äußeren Oberflächen 21, 28 so eine geschlossene zylindrische Außenfläche. Der Umfang dieser zylindrischen Außenfläche entspricht dem Bohrungsdurchmesser, in dem die Gleitlageranordnung ausgeführt ist und liegt an diesem an. Die Stege 23 und der Zylinderabschnitt 9 sind im Einbauzustand vollständig in der Achsbohrung aufgenommen.

Die Gleitlagerbuchse 32 und die Haltebuchse 33 sind aus einem gleichen Kunststoffmaterial hergestellt. Alternative Ausführungsformen der Buchsen können auch aus Metall, Holz oder Verbundwerkstoffen gefertigt sein. Im gezeigten Beispiel weisen beide Buchsen einen Harpunensteg auf. In anderen Ausführungsformen können zur Herstellung der Rastverbindung auch einseitige Harpunenstege oder eine Kombination von aufeinander abgestimmten Laschen oder Regeln zum Einsatz kommen, die unter Umständen nur eine einzige mögliche relative Position der Gleit- und Haltebuchse zueinander gestatten.

Am Flansch 10 der Gleitbuchse 32 ist ein Schlitz 41 erkennbar, in dem ein Sicherungsring zur axialen Sicherung der Gleitbuchse auf der Achse aufnehmbar ist.

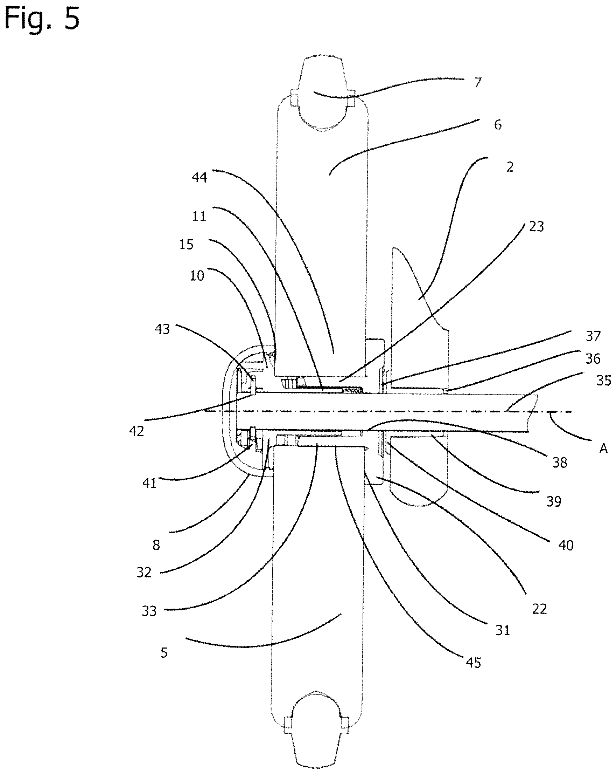

Figur 5 zeigt einen Ausschnitt der Vorderachse geschnitten in einer Schnittebene, in der die geometrische Achse verläuft. Die Achse 35 erstreckt sich auf der rechten Seite der Darstellung durch eine Haltebohrung 36, welche in einer Seitenwand 2 des Kinderspielzeugwagens ausgeführt ist. Zur gleitenden Lagerung der Achse 35 ist innerhalb der Haltebohrung 36 eine Lagerbuchse 39 ausgeführt, die sich mit geringem Spiel zwischen der Innenfläche der Haltebohrung 36 und der Außenfläche der Achse 35 befindet.

Um die axiale Bewegungsfreiheit der Lagerbuchse 39 zu beschränken, ist an der Lagerbuchse 39 ein Flansch 40 ausgeführt, welcher seitlich an der Seitenwand 2 anliegt. Der Flansch 40 der Lagerbuchse 39 liegt außen am Flansch 22 der Haltebuchse 22 an und kann in einer Ausnehmung 37 am Flansch 22 der Haltebuchse aufgenommen werden.

Das Rad 5 weist einen Haltebereich 44 auf, der zwischen den Flanschen 10, 22 der Haltebuchse und Gleitbuchse in einer Klemmverbindung aufgenommen ist, sodass die Gleitbuchse 32 und Haltebuchse 33 innerhalb der Achsbohrung 45 nicht in axialer Richtung verschiebbar sind und ebenfalls in Umfangsrichtung an dem Rad 5 gehalten werden. Die Stege 23 sind passgenau innerhalb der Achsbohrung 45 aufgenommen, sodass die Gleitbuchse 32 und die Haltebuchse 33 innerhalb der Achsbohrung 45 nicht in radialer Richtung verschiebbar sind.

Die Achse ist innerhalb der Achsbohrung 45 gleitend in der zylindrischen Aufnahme 11 der Gleitbuchse 32 und in der Führungsöffnung 38 der Haltebuchse gleitend gelagert.

Innerhalb des Flansches 10 der Gleitbuchse 32 weist die Achse eine Umfangsnut 42 auf. In dieser Nut 42 ist in Sicherungsring 43 aufgenommen, mit dem die Achse 35 in axialer Richtung relativ zur Gleitbuchse 32 gehalten wird. Zum Einbringen des Sicherungsringes 43 in die Nut 42, die fast vollständig von der Gleitbuchse 32 umschlossen ist, weist der Flansch 10 der Gleitbuchse 32 einen in Umfangsrichtung verlaufenden Schlitz 41 auf, der ausgelegt ist, den Sicherungsring mit geringem Spiel aufzunehmen, sodass der Sicherungsring 43 innerhalb des Schlitzes 41 an der Gleitbuchse 32 abgestützt ist und dessen Beweglichkeit beschränkt.

Das Rad und die Lagerung des Rades können durch entsprechend gewählte Passungen und Toleranzen zwischen den Teilen so ausgelegt sein, dass eine Rotation der Achse zum überwiegenden Teil oder sogar vollständig in der Lagerbuchse stattfindet. Die Lagerbuchse ist dazu verdrehfest in die Haltebohrung gepresst.

Zur Montage eines Rades an einer Achse wird zunächst die Gleitbuchse 32 entlang der Rotationsachse A in die Achsbohrung 45 eingeführt. In einem zweiten Schritt wird die Haltebuchse 33 aus entgegengesetzter Richtung in die Achsbohrung eingeführt und in Richtung der Rotationsachse A gegen die Gleitbuchse 32 geschoben, bis der Haltebereich 44 des Rades zwischen beiden geklemmt gehalten ist. Dabei wird gleichzeitig eine Rastverbindung zwischen den Harpunenstegen 20, 24 hergestellt. Anschließend wird die Achse 35 in die Haltebuchse 33 und Gleitbuchse 32 eingeführt, bis die Lage der Nut 42 mit dem Schlitz 41 übereinstimmt, sodass der Sicherungsring 43 durch den Schlitz in die Nut 42 eingeschoben werden kann um die axiale Sicherung zu erreichen.

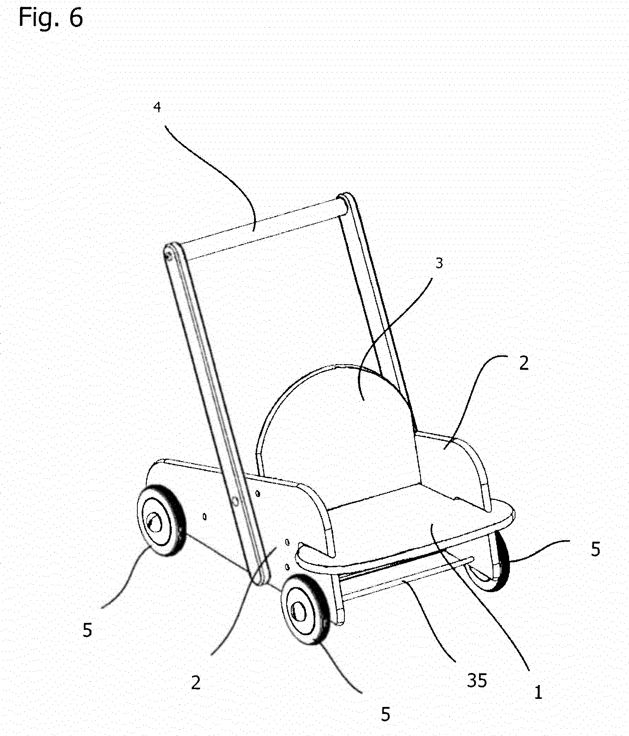

Figur 6 zeigt eine zweite, alternative Ausführungsform eines Kinderspielwagens. Sofern nicht explizit abweichend beschrieben, können die Elemente in der zweiten Ausführungsform (insbesondere Halte-, Gleit-, Lagerbuchse) ebenso ausgeführt sein wie in der ersten Ausführungsform. Dementsprechend sollen die Erläuterungen zum ersten Ausführungsbeispiel auch für die zweite Ausführungsform gelten, sofern im Folgenden nicht explizit ein Unterschied beschrieben ist. Die in den Ausführungsformen gleich ausgebildeten Merkmale sind durch identische Bezugszeichen gekennzeichnet.

Der dargestellte Kinderspielwagen ist als Lauflernwagen ausgebildet und dementsprechend ausreichend stabil und kippsicher ausgelegt, so dass ein Kleinkind sich an dem Griff 4 hochziehen kann und von dem Lauflernwagen unterstützt gehen kann. Die Kippsicherheit wird unter anderem dadurch erreicht, dass der Griff 4 und somit der Ort der Krafteinleitung in den Wagen zwischen den Vorder- und Hinterrädern ausgebildet ist. Während des Hochziehens an dem Griff 4, befindet sich das Kind teilweise zwischen den Hinterrädern, die dementsprechend nicht auf einer gemeinsamen, durchgehenden Achse gelagert sind. Stattdessen ist jedes der beiden hinteren Räder auf einer eigenen, kurzen Achse gelagert, welche in einer Achsbohrung in jeweils einer der Seitenplatten 2 gehalten ist. Um sicherzustellen, dass der Lauflernwagen zu leichtgängig davon rollt, sind ein oder mehrere Räder gebremst.

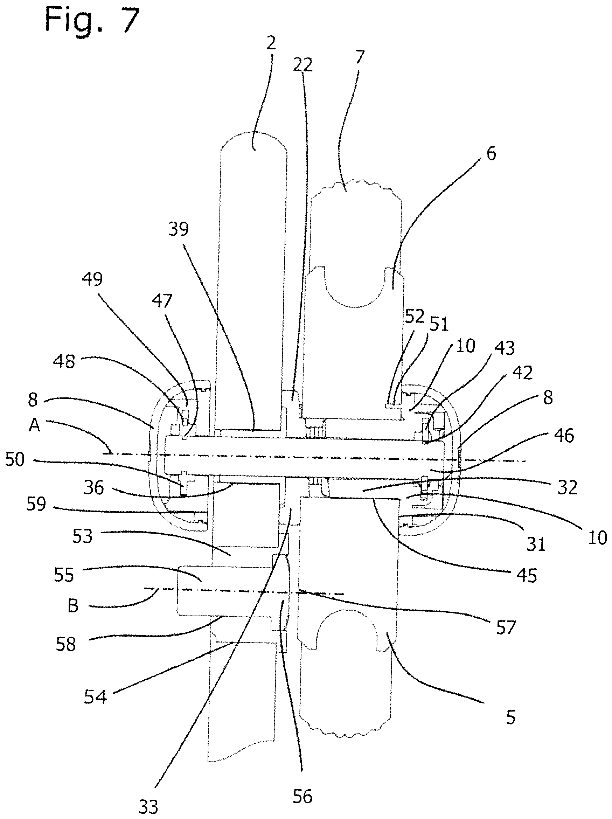

Figur 7 zeigt ein Hinterrad 5 des Lauflernwagens aus Figur 6. In einer Querschnittsansicht, wobei die Querschnittsebene die Rotationachse des Rades beinhaltet.

Im Gegensatz zur Ausführungsform aus den Figuren 1 bis 5 ist das Hinterrad auf einer kurzen Achse 46 anstelle einer durchgehenden Achse gelagert. Die Lagerung und Axialsicherung des Rades 5 entspricht der in Fig. 5 gezeigten. Auch die Gleitlagerung der kurzen Achse 46 in der Haltebohrung 36 ist mittels einer Lagerbuchse 39 umgesetzt. Um die kurze Achse 46 in axialer Richtung in der Haltebohrung 36 zu halten, ist nahe des Achsenendes eine zweite Umfangsnut 47 ausgebildet, in der ein zweiter Sicherungsring 48 geführt ist.

Der zweite Sicherungsring 48 ist in einer Sicherungsbuchse 49 aufgenommen und fast vollständig von dieser umschlossen. Die Form der Sicherungsbuchse entspricht im Wesentlichen dem Flansch der Gleitbuchse 32 mit einem Schlitz 50 zur Aufnahme des zweiten Sicherungsringes 48. Nach außen hin ist die Sicherungsbuchse ebenso wie die Gleitbuchse durch eine Kappe 8 bedeckt. Die Sicherungsbuchse weist eine glatte Haltefläche 59 auf, welche die Achse 46 in axialer Richtung relativ zur Seitenplatte 2 hält. Um das Rad 5 zu bremsen ist eine Bremse vorgesehen. In einer Bremsbohrung 54 ist verdrehfest eine Bremsbuchse 53 eingeführt. Innerhalb der Bremsbuchse 53 wird über einen gemeinsamen Gewindeeingriff 58 ein Bremsbolzen geführt, sodass dieser Bremsbolzen durch Rotation um eine Achse B entlang dieser Achse B innerhalb der Bremsbuchse vor oder zurück bewegt werden kann. An dem Bremsbolzen 55 ist ein Kopf 56 ausgeführt, welcher mit einer Bremsfläche 57 des Rades in reibenden Kontakt gebracht werden kann, um das Rad zur bremsen. In der dargestellten Position des Bremsbolzens 55 besteht zwischen dem Kopf 56 und der Bremsfläche 57 ein Luftspalt, sodass die Bremse nicht wirksam ist. Zur Betätigung der Bremse wird der Bremsbolzen 55 per Hand oder mit einem Werkzeug verdreht und bewegt sich infolge des Gewindeeingriffes 58 auf das Rad zu bis der Kopf 56 gegen die Bremsoberfläche 57 stößt und so die Bremswirkung erreicht wird. Durch weiteres Drehen des Bremsbolzens 55 kann die Kraft zwischen Kopf 56 und Bremsoberfläche 57 dosiert werden, um das Ausmaß der Bremswirkung einzustellen.

Als Haltevorsprung an der Gleitbuchse 32 dient ein Stift 51 mit einem runden Querschnitt, welcher einstückig am Flansch 10 der Gleitbuchse 33 ausgebildet ist. In alternativen Ausführungsformen kann dieser auch als zusätzliches Teil geformt und mit dem Flansch 10 verbunden sein. Der Stift 51 ist möglichst passgenau in einer Stiftbohrung 52 im Rad aufgenommen und hält dadurch die Gleitbuchse verdrehfest am Rad 5. In alternativen Ausführungen können auch mehrere oder anders ausgeformte Haltevorsprünge ausgebildet sein.

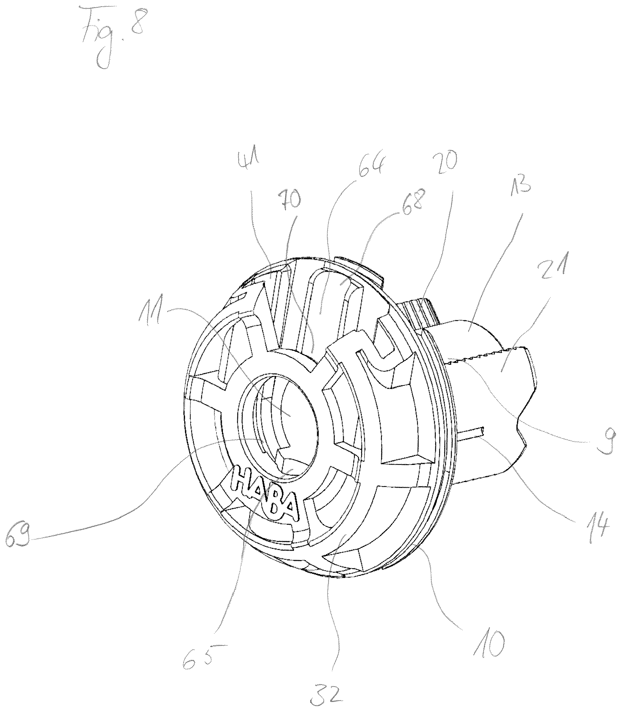

Figur 8 stellt eine zweite, alternative Ausführungsform einer Gleitbuchse dar, die als Nabe auf die Achse eines Kinderspielzeuges aufgeschoben werden kann. Die Nabe ist neben Achsen ebenso in Kombination mit Wellen kombinierbar oder anderen, in Form oder Funktion, ähnlichen Bauteilen. Bis auf die Möglichkeit zur Aufnahme eines Sicherungsmittels entspricht diese Gleitbuchse der bereits gezeigten Ausführungsform wie in den Figuren 2, 4, 5 und 7. Als Aufnahme für ein Axialsicherungsmittel wirkt ein Schlitz 41, der sich in Umfangsrichtung erstreckt. Als Axialsicherungsmittel kann Sicherungsring 43 zum Einsatz kommen, welcher wie in den Figuren 5 und 7 gezeigt im Inneren des Schlitzes anliegt und mit einer umlaufenden Nut der Achse in Eingriff ist. Bei einer Verwendung eines Sicherungsringes 43 als Axialsicherungsmittel bleibt die Gleitbuchse relativ zur Achse verdrehbar.

Innerhalb des Schlitzes 41 ist eine zweite Aufnahme ausgebildet. Diese ist eingerichtet, einen Sicherungsstift aufzunehmen. Dazu weist die zweite Aufnahme eine zylindrisch geformte Anlageoberfläche 64 auf, an der der Sicherungsstift flächig anliegt. Im Einbauzustand erstreckt sich der Sicherungsstift durch eine entsprechende Durchgangsbohrung in der Achse und jenseits der Achse in eine Bohrung 65 in der Gleitbuchse. Diese Bohrung 65 ist als Sackloch ausgebildet und bildet so für den Sicherungsstift einen Anschlag, um ihn in Position zu halten. Die Öffnung der zweiten Aufnahme 68, durch welche der Sicherungsstift von außen einzuschieben ist liegt innerhalb des Schlitzes 41, welcher als Öffnung für die zweite Aufnahm wirkt. Der Aufnahmeraum 70 im Inneren der Gleitbuchse, in dem der Sicherungsstift aufgenommen werden kann, überschneidet sich mit dem Raum 69, in dem der Sicherungsring aufgenommen werden kann. Es kann somit nur entweder ein Sicherungsstift oder ein Sicherungsring aufgenommen werden.

Durch eine Verdrehsicherung zweier Räder auf einer Achse kann beispielsweise erreicht werden, dass die Räder starr miteinander gekoppelt sind und nur mit einer identischen Rotationsgeschwindigkeit verdreht werden können. Wenn nur ein Rad oder keines der Räder verdrehgesichert ist, können die Räder auf einer gemeinsamen Achse gegeneinander verdrehbar bleiben, etwa beim Lenken oder einer Kurvenfahrt.

Alternativ können der erste und zweite Aufnahmeraum auch getrennt voneinander ausgebildet sein und getrennt voneinander ausgeformte Öffnungen aufweisen.

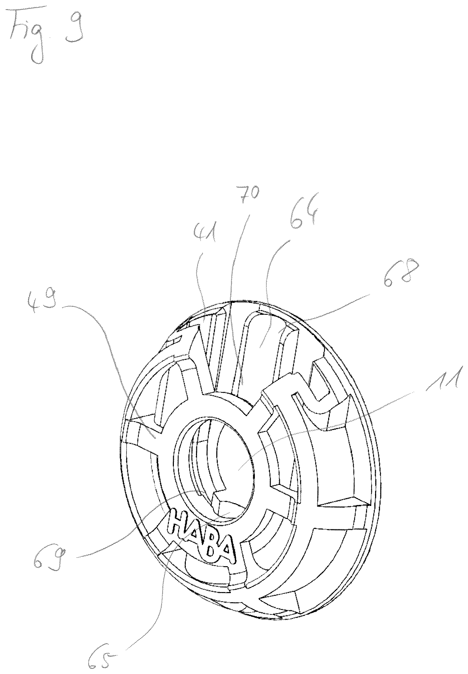

Figur 9 zeigt eine alternative Ausführungsform einer Sicherungsbuchse 49 in Analogie zur in Figur 7 gezeigten Sicherungsbuchse 49, welche eine erste und zweite Aufnahme aufweist, die identisch wie in Figur 8 dargestellt, ausgebildet sind. Die Sicherungsbuchse 49 ist im Prinzip identisch mit dem Flansch 10 der Gleitbuchse in Figur 8, wobei sie keine Stegführung oder einen entsprechend ausgebildeten zylindrischen Abschnitt aufweist.

Figur 10 zeigt den Flansch der in Figur 8 dargestellte Gleitbuchse mit einem Achsende 66, auf welches sie aufgeschoben ist und mit einem Sicherungsstift 67. Der zylindrische Abschnitt 9 der Gleitbuchse ist im hier ausschnittsweise dargestellten Rollkörper 6 aufgenommen, wie im Bezug auf das erste Ausführungsbeispiel gezeigt und beschrieben. Durch den Sicherungsstift 67 wird die Sicherungsbuche sowohl in axialer Richtung als auch in Umfangsrichtung auf dem Achsende 66 gehalten. Durch die Kopplung in Verdrehrichtung kann so auch die Übertragung eines Moments von der Buchse an eine Welle oder in umgekehrter Richtung erfolgen
Der Sicherungsstift 66 wird durch die Anlagefläche gehalten und in der Bohrung aufgenommen 65. Um ein Herausgleiten des Sicherungsstiftes 66 aus der zweiten Aufnahme zu verhindern, wird im Endzustand eine Schutzkappe 8 auf die Sicherungsbuchse aufgesetzt, wie in den Figuren 1, 5,6 und 7 gezeigt ist,

## Patentansprüche

1. Gleitlageranordnung für eine Achse eines Kinderspielzeuges, mit
einer Gleitbuchse (32), welche eingerichtet ist, wenigstens abschnittsweise in einer Achsbohrung (45) aufgenommen zu werden und eine Aufnahme (11) zur gleitenden Lagerung einer Achse (35) aufweist, und
einer Haltebuchse (33), welche durch eine Rastverbindung (34) mit der Gleitbuchse (32) verbunden ist und eingerichtet ist, die Gleitbuchse (32) in der Achsbohrung (45) zu halten
wobei die Haltebuchse (33) wenigstens einen Steg (23) aufweist, welcher sich in Richtung der Gleitbuchse (32) erstreckt und an einer Stegführung (13) der Gleitbuchse (32) geführt ist,
**dadurch gekennzeichnet, dass**
der Steg (23) wenigstens einseitig als Harpunensteg (20) ausgeführt ist, und insbesondere mit einer Harpunenstegführung (24) an der Gleitbuchse (32) in rastendem Eingriff ist.

2. Gleitlageranordnung nach Anspruch 1, **dadurch gekennzeichnet, dass** die Gleitbuchse (32) und die Haltebuchse (33) in verschiedenen Positionen zueinander verbindbar sind, wobei insbesondere die Flanschflächen (15, 31) der Gleitbuchse (32) und der Haltebuchse (33) aufeinander zu verschiebbar sind.

3. Gleitlageranordnung nach einem der vorherigen Ansprüche, **dadurch gekennzeichnet, dass** die Flanschfläche (15) der Gleitbuchse (32) und/oder die Flanschfläche (31) der Haltebuchse (33) in Umfangsrichtung unbeweglich an dem Haltebereich (44) gehalten ist, insbesondere mittels kraftschlüssigem und/oder formschlüssigem Kontakt zwischen dem Haltebereich(44) und wenigstens einer der Flanschflächen (15, 31).

4. Gleitlageranordnung nach Anspruch 2 oder 3, **dadurch gekennzeichnet, dass** wenigstens ein, an einer der Flanschflächen (15, 31) ausgeführtes, Ausgleichsprofil (16, 30) derart ausgebildet ist, dass es an einem Haltebereich anpassend zur Anlage gelangen kann.

5. Gleitlageranordnung nach einem der vorherigen Ansprüche, **dadurch gekennzeichnet, dass** ein an der Haltebuchse oder der Gleitbuchse ausgebildeter Haltevorsprung mit dem Haltebereich in formschlüssigem und/oder reibschlüssigem Eingriff ist.

6. Gleitlageranordnung, nach einem der vorherigen Ansprüche, **dadurch gekennzeichnet, dass** die Haltebuchse (33) und/oder die Gleitbuchse (32) und/oder ein Achsenende durch eine Kappe (8) bedeckt sind.

7. Gleitlageranordnung nach einem der vorherigen Ansprüche, **dadurch gekennzeichnet, dass** die Achse (35) in einer Umfangsrichtung von der Gleitbuchse (32) wenigstens annähernd vollständig umschlossen ist.

8. Gleitlageranordnung nach einem der vorherigen Ansprüche, **dadurch gekennzeichnet, dass** die Gleitbuchse (32) und/oder die Haltebuchse (33) in axialer Richtung an der Achse (35) gehalten ist.

9. Gleitlageranordnung nach einem der vorherigen Ansprüche, **dadurch gekennzeichnet, dass** eine Axialsicherung (43) in einem Schlitz (41) in der Gleitbuchse (32) und/oder der Haltebuchse (33) aufgenommen ist, wobei sich der Schlitz (41) insbesondere in einer Umfangsrichtung erstreckt.

10. Gleitlageranordnung nach einem der vorherigen Ansprüche, **dadurch gekennzeichnet, dass** sich die Achse (35) in oder durch eine Haltebohrung (36) erstreckt, und darin durch eine Lagerbuchse (39) geführt wird, wobei ein Flansch (40) der Lagerbuchse (39) flächig an einer etwa radial ausgerichteten Oberfläche der Haltebuchse (33) oder der Gleitbuchse (32) anliegt und insbesondere in einer Ausnehmung (37) in der Haltebuchse (33) oder der Gleitbuchse (32) aufgenommen ist.

11. Gleitlageranordnung nach einem der vorherigen Ansprüche, **dadurch gekennzeichnet, dass** sich die Achse (35, 46) in oder durch eine Sicherungsbuchse (49) erstreckt und an dieser in axialer Richtung gehalten ist, wobei die Achse (35, 46) mittels der Sicherungsbuchse (49) insbesondere in einer Haltebohrung (36) gehalten wird.

12. Gleitlageranordnung nach Anspruch 11, **dadurch gekennzeichnet, dass** eine Axialsicherung (48) in einem Schlitz (50) in der Sicherungsbuchse (49) aufgenommen ist, wobei sich der Schlitz (50) insbesondere in einer Umfangsrichtung erstreckt.

13. Gleitlageranordnung mit einer Gleitbuchse (32) nach einem der Ansprüche 1 bis 10 oder einer Sicherungsbuchse (49) nach einem der Ansprüche 11 oder 12, **dadurch gekennzeichnet dass** die Gleitbuchse (32) oder Sicherungsbuchse (49) eingerichtet ist, um auf der Achse (35) angebracht zu werden, mit einer ersten Aufnahme für ein Axialsicherungsmittel zum Festlegen der Position der Gleitbuchse (32) oder Sicherungsbuchse (49) auf der Achse (35) in deren axialer Richtung, wobei eine zweite Aufnahme für ein Verdrehsicherungsmittel zum Festlegen der Position der Gleitbuchse (32) oder Sicherungsbuchse (49) auf der Achse oder Welle in deren Umfangsrichtung.

14. Verwendung einer Gleitlageranordnung nach einem der vorherigen Ansprüche, zur gleitenden Lagerung einer Achse (35, 46) eines Kinderspielzeuges.

15. Kinderspielzeug mit einer Gleitlageranordnung nach einem der Ansprüche 1 bis 13.

## Claims

1. A sliding bearing assembly for an axle of a child's toy, with
a sliding bush (32) which is arranged to be received at least in sections in an axle bore (45) and has a receptacle (11) for the sliding bearing of an axle (35), and
a retaining bush (33) which is connected to the sliding bush (32) by a snap-lock connection (34) and is arranged to hold the sliding bush (32) in the axle bore (45)
the retaining bush (33) having at least one web (23) which extends in the direction of the sliding bush (32) and is guided on a web guide (13) of the sliding bush (32),
**characterised in that:**
the web (23) is designed at least on one side as a harpoon web (20), and in particular is in latching engagement with a harpoon web guide (24) on the sliding bush (32).

2. The sliding bearing assembly according to claim 1, **characterized in that** the sliding bush (32) and the retaining bush (33) can be connected to one another in different positions, in particular the flange faces (15, 31) of the sliding bush (32) and the retaining bush (33) being displaceable towards one another.

3. The slide bearing assembly according to one of the preceding claims, **characterized in that** the flange surface (15) of the sliding bush (32) and/or the flange surface (31) of the retaining bush (33) is held immovably on the retaining region (44) in the circumferential direction, in particular by means of non-positive and/or positive contact between the retaining region (44) and at least one of the flange surfaces (15, 31).

4. The sliding bearing assembly according to claim 2 or 3, **characterised in that at** least one compensating profile (16, 30) formed on one of the flange faces (15, 31) is designed in such a way,
that it can reach the system to suit a retaining area.

5. The sliding bearing assembly according to one of the preceding claims, **characterized in that** a retaining projection formed on the retaining bush or the sliding bush is in positive and/or frictional engagement with the retaining region.

6. The sliding bearing assembly according to one of the preceding claims, **characterized in that** the retaining bush (33) and/or the sliding bush (32) and/or an axle end are covered by a cap (8).

7. The sliding bearing assembly according to one of the preceding claims, **characterized in that** the axis (35) is at least approximately completely and continuously enclosed by the sliding bush (32) in a circumferential direction.

8. The sliding bearing assembly according to one of the preceding claims, **characterized in that** the sliding bush (32) and/or the retaining bush (33) is held on the axis (35) in the axial direction.

9. The sliding bearing assembly according to one of the preceding claims, **characterized in that** an axial securing means (43) is accommodated in a slot (41) in the sliding bush (32) and/or the retaining bush (33), the slot (41) extending in particular in a circumferential direction.

10. The sliding bearing assembly according to one of the preceding claims, **characterized in that** the axle (35) extends into or through a retaining bore (36) and is guided therein through a bearing bush (39), a flange (40) of the bearing bush (39) bearing flatly against an approximately radially aligned surface of the retaining bush (33) or the sliding bush (32) and in particular being accommodated in a recess (37) in the retaining bush (33) or the sliding bush (32).

11. The sliding bearing assembly according to one of the preceding claims, **characterized in that** the axle (35, 46) extends in or through a safety bush (49) and is held on the latter in the axial direction, the axle (35, 46) being held in particular in a retaining bore (36) by means of the safety bush (49).

12. The sliding bearing assembly according to claim 11, **characterized in that** an axial locking device (48) is accommodated in a slot (50) in the safety bush (49), the slot (50) extending in particular in a circumferential direction.

13. The sliding bearing assembly with a sliding bush (32) according to any one of claims 1 to 10 or a safety bush (49) according to any one of claims 11 or 12,
**characterized in that** said sliding bush (32) or safety bush (49) is adapted to be mounted on said axle (35), having a first receptacle for an axial locking means of the position of said sliding bush (32) or said safety bush (49) on said axle in the axial direction thereof,
wherein a second receptacle is provided for an anti-rotation means for fixing the position of the sliding bush (32) or safety bush (49) on the axis or shaft in the circumferential direction thereof.

14. The use of a sliding bearing assembly according to one of the previous claims for the sliding bearing of an axle (35, 46) of a child's toy.

15. A child's toy with a sliding bearing assembly according to any of claims 1 to 13.

## Revendications

1. Système de palier lisse pour l'axe d'un jouet pour enfant, comprenant
une douille coulissante (32) qui est agencée pour être reçue au moins par sections dans un alésage d'axe (45) et présente un logement (11) pour le système de palier lisse d'un axe (35), et
une douille de retenue (33) qui est reliée à la douille coulissante (32) par une liaison par encliquetage (34) et qui est agencée pour maintenir la douille coulissante (32) dans l'alésage d'axe (45)
la douille de retenue (33) ayant au moins une âme (23) qui s'étend dans la direction de la douille coulissante (32) et qui est guidée sur un guide de bande (13) de la douille coulissante (32),
**caractérisé en ce que:**
l'âme (23) est conçue au moins d'un côté comme âme de harpon (20), et en particulier est en prise par de sécurité avec un guide d'âme de harpon (24) sur la douille coulissante (32).

2. Système de palier lisse selon la revendication 1, **caractérisé en ce que** la douille lisse (32) et la douille de retenue (33) peuvent être reliées l'une à l'autre dans des positions différentes, en particulier les faces de bride (15, 31) de la douille lisse (32) et de la douille de retenue (33) étant mobiles l'une vers l'autre.

3. Système de palier lisse selon l'une des revendications précédentes, **caractérisé en ce que** la surface de bride (15) de la douille coulissante (32) et/ou la surface de bride (31) de la douille de retenue (33) est maintenue immobile sur la zone de retenue (44) dans la direction périphérique, en particulier par un contact non positif et/ou positif entre la zone de retenue (44) et au moins une des surfaces de bride (15, 31).

4. Système de palier lisse selon la revendication 2 ou 3, **caractérisé en ce qu'**au moins un profilé de compensation (16, 30) formé sur l'une des faces de bride (15, 31) est réalisé de telle manière
qu'il peut atteindre le système en fonction d'une zone de retenue.

5. Système de palier lisse selon l'une des revendications précédentes, **caractérisé en ce qu'**une saillie de retenue formée sur la douille de retenue ou la douille lisse est en engagement positif et/ou par friction avec la zone de retenue.

6. Système de palier lisse selon l'une des revendications précédentes, **caractérisé en ce que** la douille de retenue (33) et/ou la douille lisse (32) et/ou une extrémité d'axe sont recouvertes par un capuchon (8).

7. Système de palier lisse selon l'une des revendications précédentes, **caractérisé en ce que** l'axe (35) est entouré au moins approximativement complètement et en continu par la douille lisse (32) dans une direction périphérique.

8. Système de palier lisse selon l'une des revendications précédentes, **caractérisé en ce que** la douille lisse (32) et/ou la douille de retenue (33) sont maintenues sur l'axe (35) dans la direction axiale.

9. Système de palier lisse selon l'une des revendications précédentes, **caractérisé en ce qu'**un moyen de fixation axial (43) est logé dans une fente (41) dans la douille lisse (32) et/ou la douille de retenue (33), la fente (41) s'étendant en particulier dans une direction périphérique.

10. Système de palier lisse selon l'une des revendications précédentes, **caractérisé en ce que** l'axe (35) s'étend dans ou à travers un alésage de retenue (36) et y est guidé à travers une douille de palier (39), une bride (40) de la douille de palier (39) reposant à plat contre une surface sensiblement orientée radialement de la douille de retenue (33) ou la douille coulissante (32) et étant notamment montée dans un évidement (37) de la douille de retenue (33) ou la douille coulissante (32).

11. Système de palier lisse selon l'une des revendications précédentes, **caractérisé en ce que** l'axe (35, 46) s'étend dans ou à travers une douille de sécurité (49) et est maintenu sur celle-ci dans la direction axiale, l'axe (35, 46) étant maintenu en particulier dans un alésage de retenue (36) au moyen de la douille de sécurité (49).

12. Système de palier lisse selon la revendication 11, **caractérisé en ce qu'**un dispositif de sécurité axial (48) est logé dans une fente (50) de la douille de sécurité (49), la fente (50) s'étendant en particulier dans une direction périphérique.

13. Système de palier lisse avec une douille coulissante (32) selon l'une quelconque des revendications 1 à 10 ou une douille de sécurité (49) selon l'une quelconque des revendications 11 ou 12,
**caractérisé en ce que** ladite douille coulissante (32) ou ladite douille de sécurité (49) sont conçues pour être montées sur ledit axe (35), ayant un premier logement pour un moyen de sécurité axial de la position de ladite douille coulissante (32) ou de ladite douille de sécurité (49) sur ledit axe dans sa direction axiale,
dans lequel un second réceptacle est prévu pour un moyen anti-rotation pour fixer la position de la douille coulissante (32) ou de la douille de sécurité (49) sur l'axe ou l'arbre dans la direction périphérique de celui-ci.

14. Utilisation d'un système de palier lisse selon l'une des revendications précédentes pour le système de palier lisse d'un axe (35, 46) d'un jouet pour enfant.

15. Jouet pour enfant muni d'un système de palier lisse selon l'une quelconque des revendications 1 à 13.
